# EUROPEAN PATENT APPLICATION

(11) **EP 4 790 312 A1**
(43) Date of publication of application: **12.08.2026**
(21) Application number: 25212573.7
(22) Date of filing: 31.10.2025
(51) Int. Cl.: F21V 8/00

(54) **DISPLAY DEVICE AND BACKLIGHT MODULE THEREOF**

(30) Priority: 11.02.2025 TW 114105078
(71) Applicant: AmTRAN Technology Co., Ltd., New Taipei City 23553 (TW)
(72) Inventor: WANG, Chih Kuei, 236 New Taipei City (TW); LIN, Ying Hsiang, 23553 New Taipei City (TW); WANG, Chih Chieh, 23553 New Taipei City (TW); CHANG, Hsuan-Jung, 23553 New Taipei City (TW); CHEN, Kuan-Min, 23553 New Taipei City (TW)
(74) Representative: Torggler & Hofmann Patentanwälte - Innsbruck

(57) **Abstract**

A backlight module includes a housing accommodating a light guide plate, a light source and a flexible positioning member. The housing includes a backplate and a sidewall. The sidewall has a first wall portion having two openings. The light guide plate has a first lateral side corresponding to the first wall portion of the sidewall. The flexible positioning member includes a main body and two protrusions. The main body is disposed between the first wall portion of the sidewall and the first lateral side of the light guide plate. The two protrusions extend into the two openings of the first wall portion, respectively. The light guide plate has a recess that engages the main body of the flexible positioning member.

## Description

### BACKGROUND

### Technical Field

The present disclosure relates to a display device and a backlight module thereof.

### Description of Related Art

In conventional automotive displays and backlight modules, light guide plate would easily be deformed or displaced in high-temperature or vibrating environments. This is due to design flaws in the structures of the conventional automotive displays and backlight modules.

### SUMMARY

In view of the foregoing, one of the objects of the present disclosure is to provide a display device and a backlight module having high reliability.

In accordance with an embodiment of the present disclosure, a backlight module includes a housing, a light guide plate, a light source and a flexible positioning member. The housing includes a backplate and a sidewall. The sidewall includes a first wall portion having two first openings. The light guide plate is disposed in the housing and has a first lateral side corresponding to the first wall portion of the sidewall. The light source is disposed in the housing and emits light towards the light guide plate. The flexible positioning member includes a main body and two first protrusions integrally formed with the main body. The main body is disposed between the first wall portion of the sidewall and the first lateral side of the light guide plate. The two first protrusions extend into the two first openings of the first wall portion, respectively. The light guide plate has a first recess on the first lateral side. The first recess engages the main body of the flexible positioning member.

In one or more embodiments of the present disclosure, the main body of the flexible positioning member has at least one first rounded corner. The first recess of the light guide plate has at least one second rounded corner abutting the first rounded corner.

In one or more embodiments of the present disclosure, a maximum width of the first recess of the light guide plate is greater than a maximum width of the main body of the flexible positioning member in an extending direction of the first wall portion of the sidewall.

In one or more embodiments of the present disclosure, the light guide plate includes two first extending structures which are on the first lateral side and are located on both sides of the first recess. The two first extending structures extend into the two first openings of the first wall portion, respectively.

In one or more embodiments of the present disclosure, each of the two first extending structures has an inclined surface. The inclined surface is located on a side of the two first extending structures away from the first recess.

In one or more embodiments of the present disclosure, the flexible positioning member further includes a second protrusion located between the two first protrusions. The first wall portion of the sidewall further has a second opening located between the two first openings. The second protrusion is fixedly inserted into the second opening.

In one or more embodiments of the present disclosure, the light guide plate further has a second lateral side opposite to the first lateral side. The light source emits light towards the second lateral side of the light guide plate.

In one or more embodiments of the present disclosure, the backlight module further includes an optical film. The optical film is disposed on a side of the light guide plate away from the backplate and has a third lateral side corresponding to the first lateral side of the light guide plate.

In one or more embodiments of the present disclosure, the flexible positioning member further includes a barrier. The barrier extends from a side of the main body away from the backplate, and the barrier is interposed between the third lateral side of the optical film and the first wall portion of the sidewall.

In one or more embodiments of the present disclosure, the optical film has a second recess located on the third lateral side and engaging the barrier of the flexible positioning member.

In one or more embodiments of the present disclosure, the optical film includes two second extending structures which are on the third lateral side and are located on both sides of the second recess. The two second extending structures extend into the two first openings of the first wall portion, respectively.

In one or more embodiments of the present disclosure, each of the second extending structures has at least one third rounded corner.

In one or more embodiments of the present disclosure, the first wall portion of the sidewall further has a second opening. The second opening is located between the two first openings and has a larger area than each of the two first openings.

In one or more embodiments of the present disclosure, in a direction perpendicular to the backplate, the second opening of the first wall portion of the sidewall is taller than the main body of the flexible positioning member.

In accordance with an embodiment of the present disclosure, a display device includes a display panel and the backlight module described above. The backlight module is positioned to face a rear surface of the display panel.

In summary, the backlight module of the present disclosure includes at least one flexible positioning member disposed between the light guide plate and the sidewall of the housing. The flexible positioning member can hold the light guide plate still in the housing. Various structural configurations of the light guide plate, the flexible positioning member and the sidewall of the housing described above can help improve the reliability of the backlight module, such that the backlight module can work well in environments with large temperature variation and vibrations. For example, the backlight module of the present disclosure can be used in automotive displays.

### BRIEF DESCRIPTION OF THE DRAWINGS

To make the objectives, features, advantages, and embodiments of the present disclosure, including those mentioned above and others, more comprehensible, descriptions of the accompanying drawings are provided as follows.
Fig. 1 illustrates a perspective view of a display device in accordance with an embodiment of the present disclosure;
Fig. 2 illustrates a cross-sectional view of the display device shown in Fig. 1 taken along the line segment 2-2';
Fig. 3 illustrates an assembled view of the housing and the flexible positioning member of the backlight module of the display device shown in Fig. 1;
Fig. 4 illustrates an exploded view of the housing and the flexible positioning member of the backlight module of the display device shown in Fig. 1;
Fig. 5 illustrates a top view of the housing, the light guide plate and the flexible positioning member of the backlight module of the display device shown in Fig. 1;
Fig. 6 illustrates a top view of the housing, the optical film and the flexible positioning member of the backlight module of the display device shown in Fig. 1;
Fig. 7 illustrates a cross-sectional view of a backlight module in accordance with another embodiment of the present disclosure;
Fig. 8 illustrates an assembled view of the housing and the flexible positioning member of the backlight module shown in Fig. 7;
Fig. 9 illustrates an exploded view of the housing and the flexible positioning member of the backlight module shown in Fig. 7; and
Fig. 10 illustrates a top cross-sectional view of the housing and the flexible positioning member shown in Fig. 8 taken along the line segment 10-10'.

### DETAILED DESCRIPTION

For the completeness of the description of the present disclosure, reference is made to the accompanying drawings and the various embodiments described below. Various features in the drawings are not drawn to scale and are provided for illustration purposes only. To provide full understanding of the present disclosure, various practical details will be explained in the following descriptions. However, a person with an ordinary skill in relevant art should realize that the present disclosure can be implemented without one or more of the practical details. Therefore, the present disclosure is not to be limited by these details.

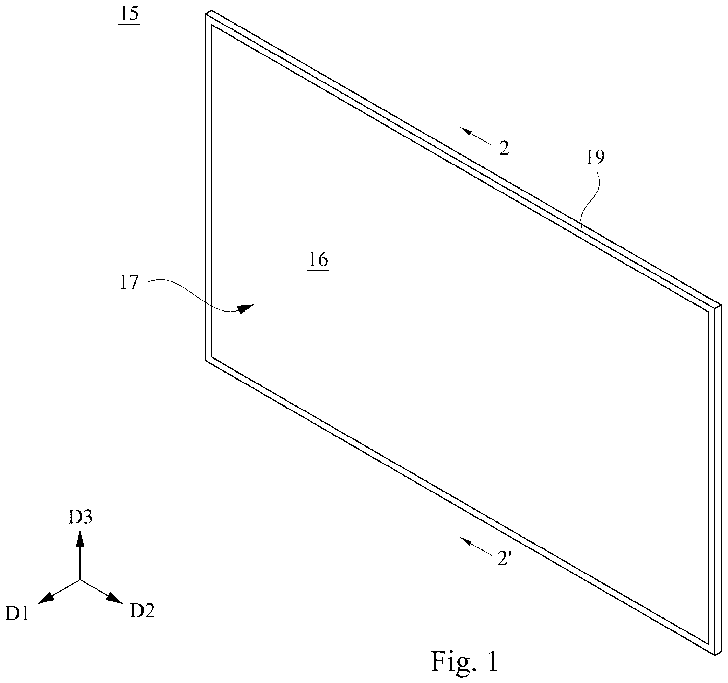

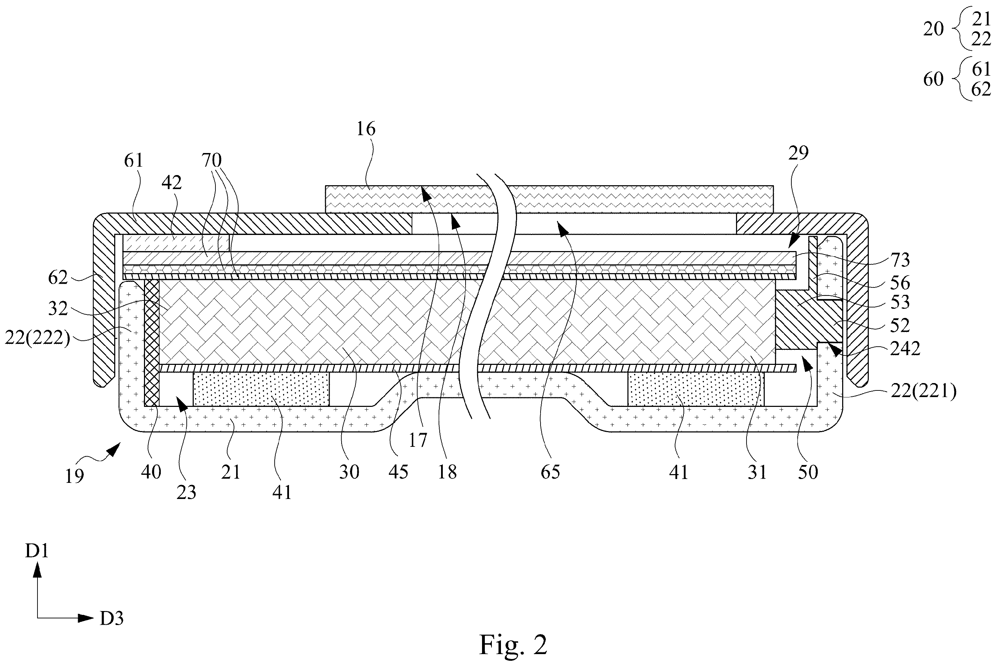

Reference is made to Fig. 1. Fig. 1 illustrates a perspective view of a display device 15 in accordance with an embodiment of the present disclosure. The display device 15 includes a display panel 16 and a backlight module 19. The display panel 16 has a first surface 17 and a second surface 18 opposite to the first surface 17 as illustrated in Fig. 2. The first surface 17 is configured to outwardly display a screen. In other words, the first surface 17 is a display surface of the display panel 16. The second surface 18 is a rear surface of the display panel 16. The backlight module 19 is positioned to face the second surface 18 of the display panel 16. The backlight module 19 is configured to provide light to the display panel 16 to enable the display panel 16 to display a screen. The display device 15 of the present disclosure is, for example, an automotive display. The display panel 16 is, for example, an LCD display panel. The backlight module 19 is, for example, an edge-lit backlight module. However, the present disclosure is not limited thereto. The display device 15, the display panel 16, or the backlight module 19 can be other types of display devices, display panels, or backlight modules.

As shown in Fig. 1, the first surface 17 of the display panel 16 faces a first direction D1. In other words, the first direction D1 is a normal direction of the first surface 17 of the display panel 16. The display device 15 further has two edges extending along a second direction D2, as well as another two edges extending along a third direction D3. In some embodiments, the first direction D1, the second direction D2, and the third direction D3 are mutually orthogonal.

It is noted that the first direction D1, the second direction D2, and the third direction D3 form a coordinate system tied to the display device 15 and the backlight module 19. Hence, when the orientation of the display device 15 or the backlight module 19 changes, e.g., changing to a vertical position or a horizontal position, the first direction D1, the second direction D2, and the third direction D3 change accordingly.

Reference is made to Fig. 2. Fig. 2 illustrates a cross-sectional view of the display device 15 shown in Fig. 1 taken along the line segment 2-2'. As shown in Fig. 2, the backlight module 19 includes a housing 20, a light guide plate 30 and a light source 40. The housing 20 has a light exit opening 29. The display panel 16 is disposed at the light exit opening 29 of the housing 20. The light guide plate 30 and the light source 40 are disposed in the housing 20, and the light source 40 is configured to emit light towards the light guide plate 30. The light emitted by the light source 40 enters the light guide plate 30 and subsequently travels towards the light exit opening 29 and illuminates the display panel 16. The light source 40 can be a light board or a light bar. The light source 40 may include a circuit board and a plurality of light-emitting elements, e.g., LEDs or miniLEDs, disposed on the circuit board. The backlight module 19 further includes at least one flexible positioning member 50. The flexible positioning member 50 is disposed in the housing 20 and is configured to secure the position of the light guide plate 30.

As shown in Fig. 2, the housing 20 includes a backplate 21 and a sidewall 22. The backplate 21 is opposite to the light exit opening 29. The sidewall 22 is bent relative to the backplate 21 and extends from the backplate 21. The sidewall 22 may be perpendicular to the backplate 21. For example, the sidewall 22 can extend from the backplate 21 along the first direction D1. In some embodiments, the backplate 21 and the sidewall 22 are integrally formed. In other words, the housing 20, including the backplate 21 and the sidewall 22, is one-piece structure. The sidewall 22 can be provided on four sides of the backplate 21 and surround the backplate 21, but is not limited to said configuration. The sidewall 22 includes a first wall portion 221. The light guide plate 30 has a first lateral side 31. When the light guide plate 30 is disposed in the housing 20, the first lateral side 31 corresponds to the first wall portion 221 of the sidewall 22. The flexible positioning member 50 is clamped between the first wall portion 221 of the sidewall 22 and the first lateral side 31 of the light guide plate 30. In other words, the flexible positioning member 50 is in tight contact with both the sidewall 22 and the light guide plate 30. The flexible positioning member 50 may include elastomer material, such as rubber. The flexible positioning member 50 can be integrally formed as one piece.

As shown in Fig. 2, the sidewall 22 further includes a second wall portion 222. The light guide plate 30 further has a second lateral side 32. When the light guide plate 30 is disposed in the housing 20, the second lateral side 32 corresponds to the second wall portion 222 of the sidewall 22. In some embodiments, the backlight module 19 is an edge-lit backlight module and the light source 40 is disposed between the second wall portion 222 of the sidewall 22 and the second lateral side 32 of the light guide plate 30. The light source 40 is configured to emit light towards the second lateral side 32 of the light guide plate 30.

As shown in Fig. 2, the first wall portion 221 and the second wall portion 222 are located on different sides of the sidewall 22. In the illustrated embodiment, the first wall portion 221 and the second wall portion 222 are located on two opposite sides of the housing 20 along the third direction D3. The first lateral side 31 and the second lateral side 32 are located on different sides of the light guide plate 30. In the illustrated embodiment, the first lateral side 31 and the second lateral side 32 are located on two opposite sides of the light guide plate 30 along the third direction D3. Therefore, in the illustrated embodiment, the flexible positioning member 50 is disposed on a side of the light guide plate 30 away from the light source 40. The first lateral side 31 of the light guide plate 30 abuts against the flexible positioning member 50, and the second lateral side 32 of the light guide plate 30 can abut against the light source 40 or the second wall portion 222 of the sidewall 22. In some embodiments, at least one cushioning member (not depicted) can be provided on the light source 40 or the second wall portion 222 of the sidewall 22, and the second lateral side 32 of the light guide plate 30 can abut against the cushioning member. In some embodiments, the backlight module 19 can include a plurality of flexible positioning members 50 disposed on wall portions of the sidewall 22 and the flexible positioning members 50 abut against lateral sides of the light guide plate 30. For example, the flexible positioning members 50 may abut against the first lateral side 31 away from the light source 40, and abut against another two lateral sides adjoining the first lateral side 31.

As shown in Fig. 2, in some embodiments, the backlight module 19 further includes a reflector sheet 45 disposed between the light guide plate 30 and the backplate 21 of the housing 20. The reflector sheet 45 covers a side of the light guide plate 30 adjacent to the backplate 21. In other words, the reflector sheet 45 covers a rear surface of the light guide plate 30. The reflector sheet 45 can reflect light toward the display panel 16 at the light exit opening 29. In some embodiments, the backplate 21 of the housing 20 has at least one recessed portion 23, and the recessed portion 23 is formed on an inner side of the sidewall 22. The backlight module 19 may further include at least one first spacer 41 disposed in the recessed portion 23, which can support the reflector sheet 45 and the light guide plate 30, i.e., the first spacer 41 is located between the backplate 21 and the reflector sheet 45 (or the light guide plate 30). In some embodiments, the recessed portion 23 can be a groove extending substantially parallel to the sidewall 22. The first spacer 41 can be a pad of elongated shape disposed in the recessed portion 23. The first spacer 41 may include elastomer material, such as rubber.

As shown in Fig. 2, in some embodiments, the backlight module 19 further includes at least one optical film 70. The optical film 70 is disposed on a side of the light guide plate 30 away from the backplate 21, i.e., the optical film 70 is disposed on a front surface or a light emitting surface of the light guide plate 30. In other words, the light guide plate 30 is disposed between the backplate 21 and the optical film 70. The optical film 70 may include diffuser film, prism film, light enhancement film or other types of optical films. In some embodiments, the backlight module 19 includes a plurality of optical films 70, which are stacked with the light guide plate 30.

As shown in Fig. 2, in some embodiments, the backlight module 19 further includes a frame 60. The frame 60 is disposed on the housing 20 and is configured to carry the display panel 16. The display panel 16 can be mounted on an outer side of the frame 60 as illustrated in Fig. 2. Alternatively, the display panel 16 can be mounted inside the frame 60. The frame 60 has a light exit opening 65 to allow the light emitted by the light source 40 to incident on the display panel 16. In some embodiments, the frame 60 includes a first portion 61 and a second portion 62 connected to the first portion 61. The first portion 61 is substantially parallel to the backplate 21 and covers a peripheral region of the optical film 70. The display panel 16 is disposed on the first portion 61 of the frame 60. The second portion 62 of the frame 60 is bent relative to the first portion 61 and extends in a direction opposite to the first direction D1 to an outer side of the sidewall 22 of the housing 20. In some embodiments, the second portion 62 of the frame 60 is substantially parallel to the sidewall 22 of the housing 20. The second portion 62 of the frame 60 can be affixed to the sidewall 22 of the housing 20 by snap fitting, adhesive bonding or other suitable fixing means. In some embodiments, the backlight module 19 further includes at least one second spacer 42 disposed between the optical film 70 and the first portion 61 of the frame 60. In some embodiments, the second spacer 42 includes adhesives and can be adhered to the optical film 70 and the frame 60. In some embodiments, the display panel 16 is mounted inside the frame 60, and the second spacer 42 can be adhered to the display panel 16 and the frame 60.

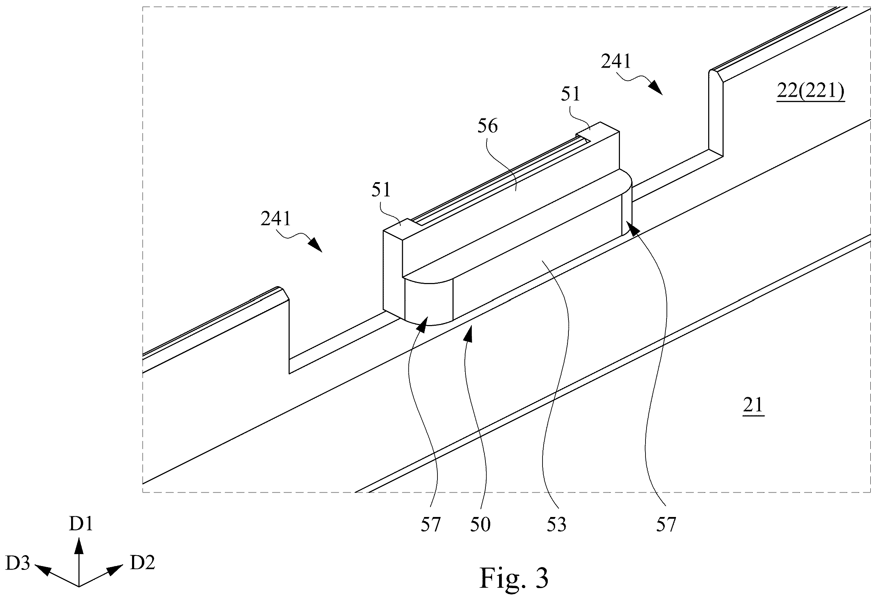

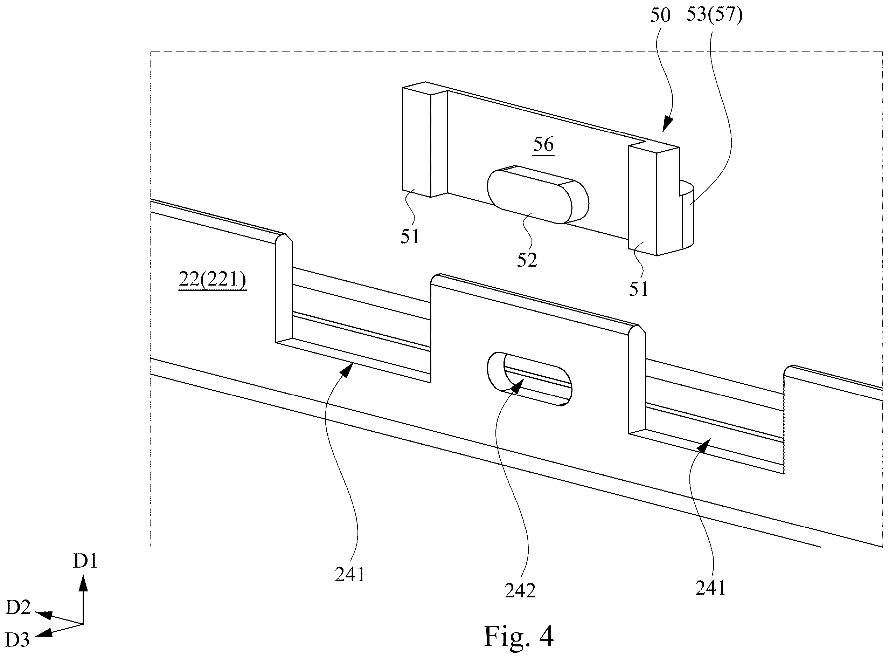

Reference is made additional to Figs. 3 and 4. Fig. 3 illustrates an assembled view of the housing 20 and the flexible positioning member 50 of the backlight module 19 of the display device 15 shown in Fig. 1, and Fig. 4 illustrates an exploded view of the housing 20 and the flexible positioning member 50 of the backlight module 19 of the display device 15 shown in Fig. 1. As shown in Figs. 2-4, the flexible positioning member 50 includes a main body 53 and two first protrusions 51. When the flexible positioning member 50 is attached to the first wall portion 221, the main body 53 is disposed between the first wall portion 221 of the sidewall 22 and the first lateral side 31 of the light guide plate 30, and the main body 53 abuts against the first wall portion 221. The two first protrusions 51 are disposed on both sides of the main body 53 and protrude from the main body 53 on the side away from the light guide plate 30. The first wall portion 221 of the sidewall 22 has two first openings 241. The two first protrusions 51 extend into the two first openings 241, respectively. Each first opening 241 has a greater width than a respective first protrusion 51 in the second direction D2, which is the extending direction of the first wall portion 221. For example, each first opening 241 may be at least twice as wide as a respective first protrusion 51. By this arrangement, when the light guide plate 30 expands due to high temperature and compresses the flexible positioning member 50, the first opening 241 of the sidewall 22 can provide space for the squeezed flexible positioning member 50 to deform outward. The flexible positioning member 50 can thus be prevented from flipping and detaching from the sidewall 22 or causing warpage displacement of the light guide plate 30. Both will make the light guide plate 30 cannot be fixed with the flexible positioning member 50.

As shown in Figs. 2-4, in some embodiments, the flexible positioning member 50 further includes a second protrusion 52. The second protrusion 52 is connected to the main body 53 and protrudes from the main body 53 on the side away from the light guide plate 30. The second protrusion 52 is located between the two first protrusions 51. Correspondingly, the first wall portion 221 of the sidewall 22 further has a second opening 242 located between the two first openings 241. When the flexible positioning member 50 is attached to the first wall portion 221, the second protrusion 52 of the flexible positioning member 50 is fixedly inserted into the second opening 242. By matching the second protrusion 52 with the second opening 242, the flexible positioning member 50 can be positioned on the sidewall 22 to facilitate assembling the backlight module 19. In some embodiments, the second opening 242 has a smaller area than each of the two first openings 241.

As shown in Figs. 2-4, in some embodiments, the second portion 62 of the frame 60 can cover the two first openings 241 and the second opening 242 of the sidewall 22. In some embodiments, the two first openings 241 of the sidewall 22 are notches with one open side, which can facilitate assembling the backlight module 19.

As shown in Figs. 2-4, in some embodiments, the flexible positioning member 50 further includes a barrier 56 connected to the main body 53. When the flexible positioning member 50 is attached to the first wall portion 221, the barrier 56 extends along the first direction D1 from a side of the main body 53 away from the backplate 21. The barrier 56 is interposed between a third lateral side 73 of the optical film 70 and the first wall portion 221 of the sidewall 22. The third lateral side 73 of the optical film 70 corresponds to the first lateral side 31 of the light guide plate 30. With this configuration, the barrier 56 can isolate the optical film 70 from the sidewall 22 of the housing 20 and provide cushioning, such that the optical film 70 would not directly collide with the sidewall 22 of the housing 20 and create noise when the display device 15 or the backlight module 19 is shaken or vibrated.

As shown in Figs. 2-4, in some embodiments, in the direction away from the backplate 21, a top end of the barrier 56 of the flexible positioning member 50 is substantially flush with a top end of the sidewall 22 of the housing 20. In some embodiments, one side of the barrier 56 abuts against the sidewall 22, and the other side of the barrier 56 is indented relative to the main body 53 in the third direction D3. The third lateral side 73 of the optical film 70 extends at least partially beyond the first lateral side 31 of the light guide plate 30. The indented space of the barrier 56 can accommodate the third lateral side 73 of the optical film 70.

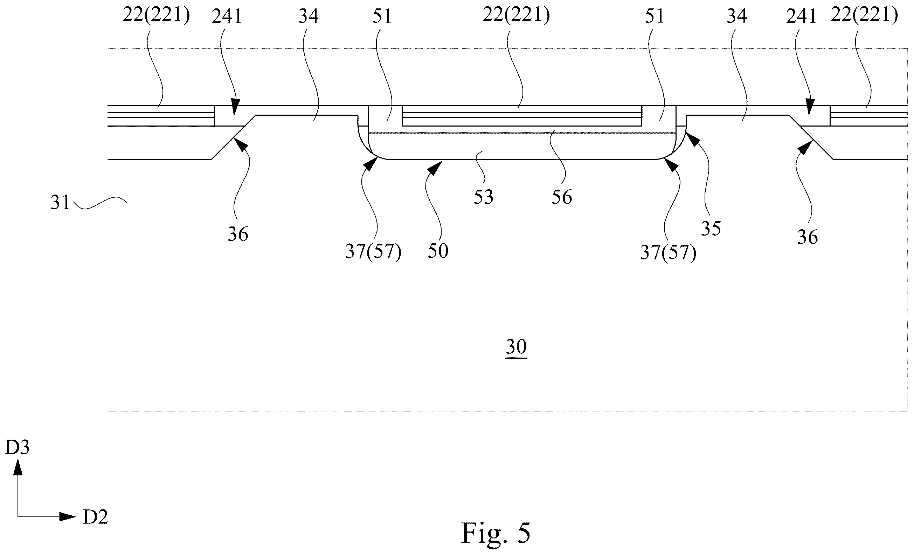

Reference is made additionally to Fig. 5. Fig. 5 illustrates a top view of the housing 20, the light guide plate 30 and the flexible positioning member 50 of the backlight module 19 of the display device 15 shown in Fig. 1. As shown in Figs. 3-5, the light guide plate 30 further has a first recess 35 on the first lateral side 31. The first recess 35 receives and engages the main body 53 of the flexible positioning member 50. By this arrangement, the flexible positioning member 50 can restrain the movement of the light guide plate 30 and prevent displacement.

As shown in Figs. 3-5, in some embodiments, the main body 53 of the flexible positioning member 50 has at least one first rounded corner 57. The first recess 35 of the light guide plate 30 has at least one second rounded corner 37 abutting against the first rounded corner 57. In the illustrated embodiment, the main body 53 of the flexible positioning member 50 has two first rounded corners 57 facing the light guide plate 30. Correspondingly, the first recess 35 of the light guide plate 30 has two second rounded corners 37. In some embodiments, a maximum width of the first recess 35 of the light guide plate 30 is greater than a maximum width of the main body 53 of the flexible positioning member 50 in an extending direction of the first wall portion 221 of the sidewall 22. With this configuration, the issues of gaps between the flexible positioning member 50 and the light guide plate 30 due to thermal expansion and contraction can be improved. Thus, displacement of the flexible positioning member 50 and the light guide plate 30, as well as the creation of the noises, can be prevented when the display device 15 or the backlight module 19 is shaken or vibrated.

As shown in Fig. 5, in some embodiments, the light guide plate 30 includes two first extending structures 34 which are on the first lateral side 31 and are located on both sides of the first recess 35. In other words, the two first extending structures 34 define the first recess 35. The second rounded corner 37 is located on an inner side of the first extending structures 34. The second rounded corner 37 can help prevent stress concentration, thereby reducing the risk of cracking the first extending structure 34.

As shown in Fig. 5, in some embodiments, the two first extending structures 34 extend into the two first openings 241 of the first wall portion 221, respectively, and are located outside the first protrusions 51 of the flexible positioning member 50. The arrangement of the first extending structures 34 associated with the first openings 241 can restrain the movement of the light guide plate 30.

As shown in Fig. 5, in some embodiments, each of the two first extending structures 34 has an inclined surface 36. Each inclined surface 36 is located on the side of the respective first extending structures 34 away from the first recess 35. The inclined surfaces 36 can enhance the structural strength of the first extending structures 34, thereby reducing the risk of cracking the first extending structures 34.

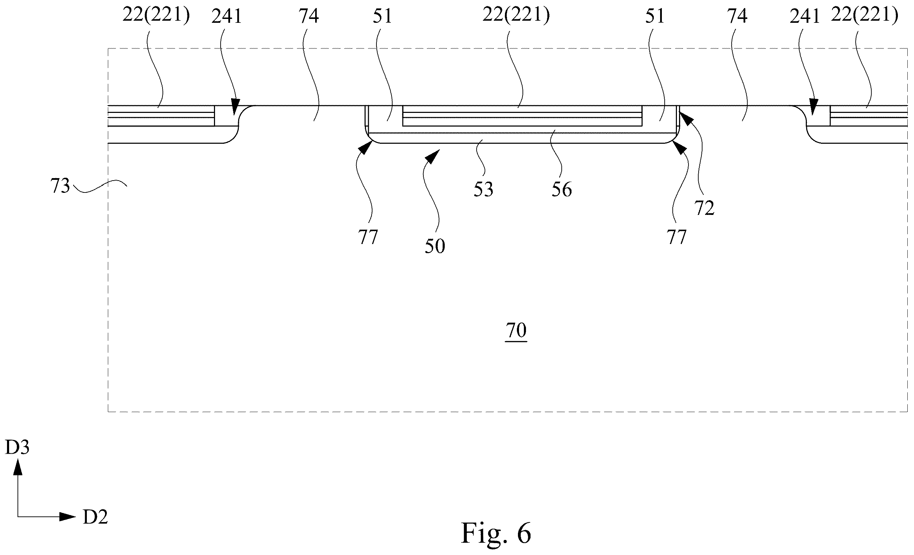

Fig. 6 illustrates a top view of the housing 20, the optical film 70 and the flexible positioning member 50 of the backlight module 19 of the display device 15 shown in Fig. 1. As shown, in some embodiments, the optical film 70 has a second recess 72 located on the third lateral side 73 and engaging the barrier 56 of the flexible positioning member 50. By this arrangement, the flexible positioning member 50 can restrain the movement of the optical film 70.

As shown in Fig. 6, in some embodiments, the optical film 70 includes two second extending structures 74 which are on the third lateral side 73 and are located on both sides of the second recess 72. In other words, the two second extending structures 74 define the second recess 72. The two second extending structures 74 extend into the two first openings 241 of the first wall portion 221, respectively, and are located outside the first protrusions 51 of the flexible positioning member 50. The arrangement of the second extending structures 74 associated with the first openings 241 can restrain the movement of the optical film 70. In some embodiments, each of the second extending structures 74 has at least one third rounded corner 77, which can help prevent stress concentration and reduce the risk of cracking the second extending structures 74. In some embodiments, the second extending structures 74 of the optical film 70 are stacked with the first extending structures 34 of the light guide plate 30.

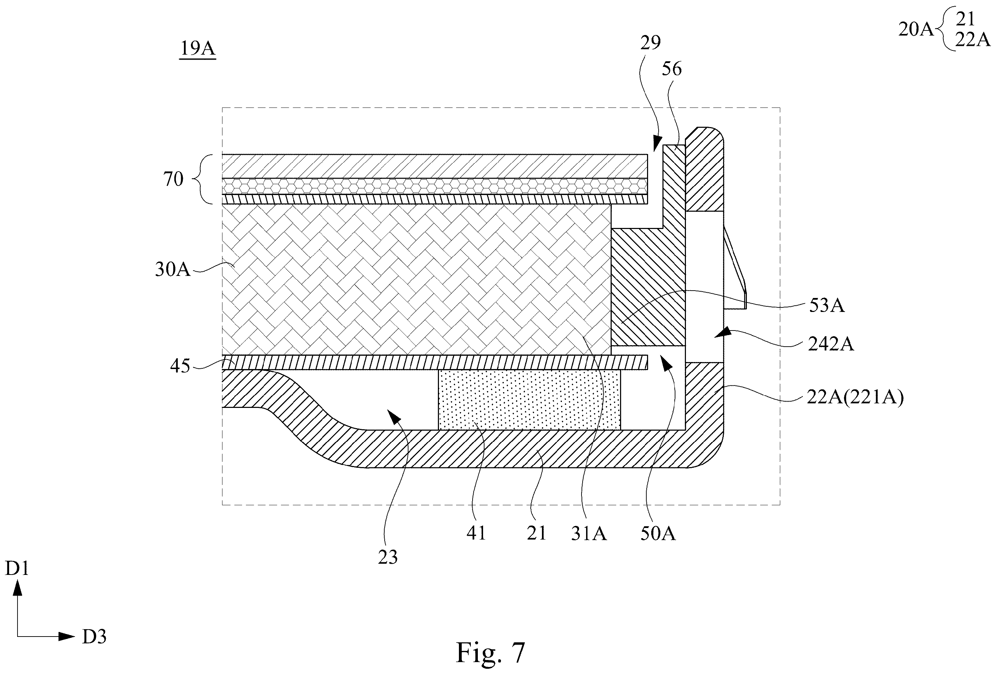

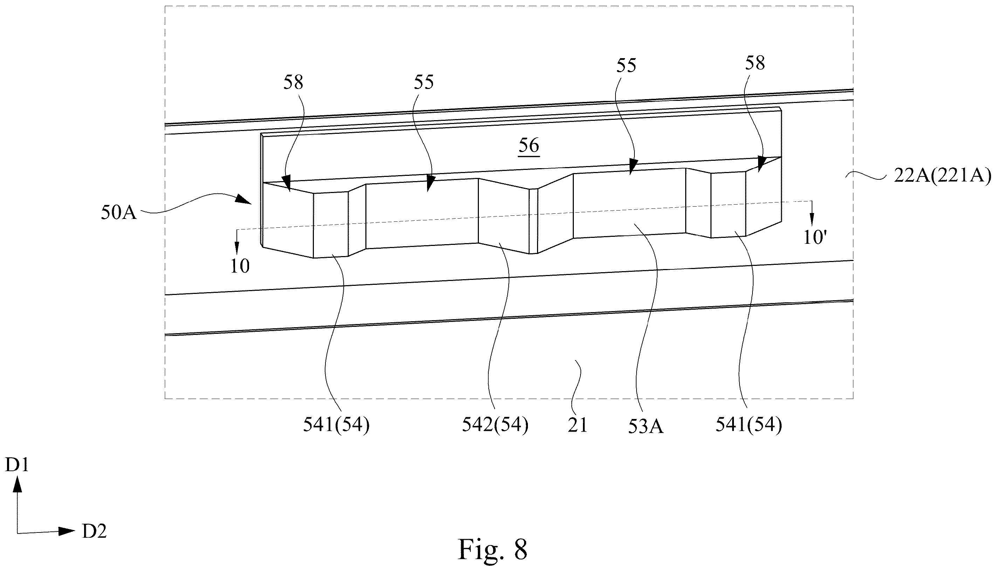

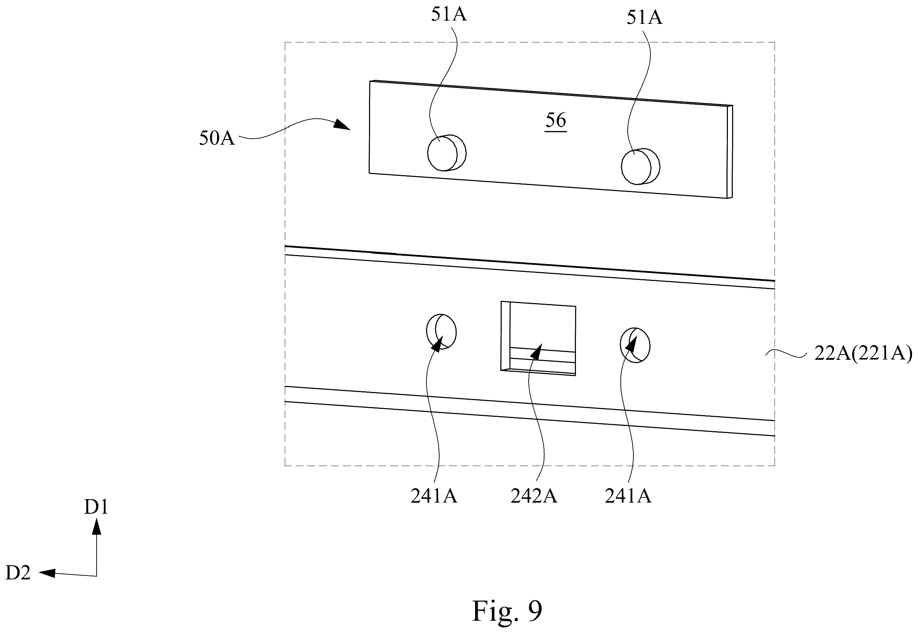

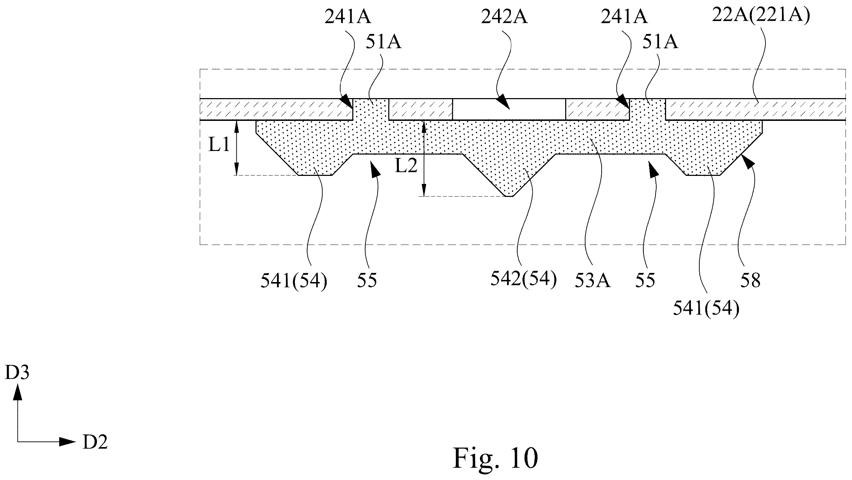

Reference is made to Figs. 7-10. Fig. 7 illustrates a cross-sectional view of a backlight module 19A in accordance with another embodiment of the present disclosure. Fig. 8 illustrates an assembled view of the housing 20A and the flexible positioning member 50A of the backlight module 19A shown in Fig. 7. Fig. 9 illustrates an exploded view of the housing 20A and the flexible positioning member 50A of the backlight module 19A shown in Fig. 7. Fig. 10 illustrates a top cross-sectional view of the housing 20A of the backlight module 19A and the flexible positioning member 50A shown in Fig. 8 taken along the line segment 10-10'.

As shown in Figs. 7-10, the main differences between the present embodiments and the previous embodiments include: (1) The first wall portion 221A of the sidewall 22A has two first openings 241A and a second opening 242A; The second opening 242A is located between the two first openings 241A, and the second opening 242A has a larger area than each of the two first openings 241A; (2) The flexible positioning member 50A includes a main body 53A disposed between the first wall portion 221A of the sidewall 22A and the first lateral side 31A of the light guide plate 30A; The main body 53A abuts against the first wall portion 221A and includes a plurality of support structures 54; At least one of the support structures 54 is configured to abut against the first lateral side 31A of the light guide plate 30A; (3) The flexible positioning member 50A covers the second opening 242A of the sidewall 22A; The flexible positioning member 50A further includes two protrusions 51A; The two protrusions 51A are connected to the main body 53A and are fixedly inserted into the two first openings 241A of the sidewall 22A, respectively, to position the flexible positioning member 50A on the sidewall 22A. Moreover, at normal temperatures, no part of the flexible positioning member 50A extends into the second opening 242A. With this configuration, when the light guide plate 30A expands due to high temperature and compresses the flexible positioning member 50A, the second opening 242A of the sidewall 22A can provide space for the flexible positioning member 50A to deform outward. Thus, the flexible positioning member 50A can be prevented from flipping and detaching from the sidewall 22A, or causing warpage displacement of the light guide plate 30A. Both will make the light guide plate 30A cannot be fixed with the flexible positioning member 50A.

In some embodiments, the backlight module 19A can include multiple flexible positioning members 50A disposed on wall portions of the sidewall 22A and abutting against lateral sides of the light guide plate 30A. For example, the flexible positioning members 50A may abut against the first lateral side 31A, which is away from the light source 40, and another two lateral sides adjoining the first lateral side 31A. In some embodiments, the backlight module 19A can include only a single flexible positioning member 50A disposed on one wall portion of the sidewall 22A, e.g., the first wall portion 221A.

As shown in Figs. 7-10, in some embodiments, along the first direction D1 perpendicular to the backplate 21, the size of the second opening 242A at the first wall portion 221A of the sidewall 22A is greater than the main body 53A of the flexible positioning member 50A and is less than the barrier 56 of the flexible positioning member 50A. For example, the second opening 242A at the first wall portion 221A of the sidewall 22A can be taller than the main body 53A of the flexible positioning member 50A and shorter than the barrier 56 of the flexible positioning member 50A. This configuration allows the flexible positioning member 50A to deform and partially enter the second opening 242A when being compressed, and the flexible positioning member 50A has elastic recovery capability to restore its shape and position after the compression ends.

As shown in Figs. 7-10, the support structures 54 are disposed on a side of the main body 53A facing the light guide plate 30A, and at least one of the support structures 54 is configured to abut against the light guide plate 30A. A recess 55 is formed between any two adjacent support structures 54. In other words, the main body 53A has wavy structures toward the light guide plate 30A. The first lateral side 31A of the light guide plate 30A abuts against the main body 53A of the flexible positioning member 50A. The first lateral side 31A of the light guide plate 30A can be generally straight and flat. However, it can also have any other shapes. In some embodiments, the two outermost support structures 54 are formed with bevels 58 on their outer sides. The aforementioned structures enable greater deformability of the flexible positioning member 50A, which can help improve the gap changes between the flexible positioning member 50A and the light guide plate 30A caused by thermal expansion and contraction. Thus, the displacement of the flexible positioning member 50A and the light guide plate 30A, as well as the creation of noises, can be prevented when the display device 15 or the backlight module 19 is shaken or vibrated, which is beneficial to the display device 15 and the backlight module 19A working in extreme environments.

As shown in Figs. 7-10, in some embodiments, the main body 53A of the flexible positioning member 50A includes two first support structures 541 and a second support structure 542. The first support structures 541 and the second support structure 542 protrude from the main body 53A. The second support structure 542 is located between the two first support structures 541. The main body 53A has an outer surface abutting against the first wall portion 221A of the sidewall 22A. Distance L2 indicates a perpendicular distance between an end of the second support structure 542 and the outer surface of the main body 53A. Distance L1 indicates a perpendicular vertical distance between an end of the first support structure 541 and the outer surface of the main body 53A. The distance L2 is greater than the distance L1. In other words, the second support structure 542 protrudes farther outward from the main body 53A than each of the two first support structures 541. In some embodiments, at least one of the two first support structures 541 is substantially trapezoidal. Specifically, a horizontal cross section of at least one of the two first support structures 541, i.e., a cross section normal to the first direction D1, is trapezoidal. In some embodiments, the second support structure 542 is substantially triangular. Specifically, a horizontal cross section of the second support structure 542 is triangular. In some embodiments, the second support structure 542 is a supporting rib that laterally supports the light guide plate 30A. When the light guide plate 30A contracts under low temperature, the second support structure 542 remains in contact with the light guide plate 30A and supports the light guide plate 30A, which can prevent displacement of the light guide plate 30A caused by the enlarged gap. When the light guide plate 30A expands under high temperature, the second support structure 542 and the first support structures 541 are compressed by the light guide plate 30A, such that the second support structure 542 and the first support structures 541 collapse inwardly and deform toward both sides. Thus, warpage of the light guide plate 30A under high temperature can be prevented. In some embodiments, the position of the second support structure 542 corresponds to the second opening 242A of the first wall portion 221A of the sidewall 22A. Hence, the second support structure 542 also deforms backward when being compressed by the light guide plate 30A.

In some embodiments, structures of the flexible positioning members 50 and 50A can be interchanged. For example, the flexible positioning member 50 may include the two protrusions 51A in place of the first protrusions 51 and the second protrusion 52, with corresponding adjustments made to the openings of the first wall portion 221. Optionally, the flexible positioning member 50 may include the two first support structures 541 and the second support structure 542 in place of the first rounded corners 57 of the main body 53, with corresponding adjustments made to the first recess 35 and the second rounded corners 37 of the light guide plate 30. In some embodiments, the display device 15 can include both the flexible positioning member 50 and the flexible positioning member 50A. The sidewall of the housing and the light guide plate can include the corresponding structures described above. The function of the display device 15 will be unaffected by the changes.

In summary, the backlight module of the present disclosure includes at least one flexible positioning member disposed between the light guide plate and the sidewall of the housing. The flexible positioning member can hold the light guide plate still in the housing. Various structural configurations of the light guide plate, the flexible positioning member and the sidewall of the housing described above can help improve the reliability of the backlight module, such that the backlight module can work well in environments with large temperature variation and vibrations. For example, the backlight module of the present disclosure can be used in automotive displays.

## Claims

1. A backlight module (19), **characterized by** comprising:
a housing (20) comprising a backplate (21) and a sidewall (22), the sidewall comprising a first wall portion (221), the first wall portion having two first openings (241);
a light guide plate (30) disposed in the housing and having a first lateral side (31), the first lateral side corresponding to the first wall portion of the sidewall;
a light source (40) disposed in the housing and emitting light towards the light guide plate; and
a flexible positioning member (50) comprising a main body (53) and two first protrusions (51) integrally formed with the main body, wherein the main body is disposed between the first wall portion of the sidewall and the first lateral side of the light guide plate, the two first protrusions extend into the two first openings of the first wall portion, respectively, the light guide plate has a first recess (35) on the first lateral side, and the first recess engages the main body of the flexible positioning member.

2. The backlight module of claim 1, wherein the main body (53) of the flexible positioning member (50) has at least one first rounded corner (57), and the first recess (35) of the light guide plate (30) has at least one second rounded corner (37) abutting the at least one first rounded corner.

3. The backlight module of claim 2, wherein a maximum width of the first recess (35) of the light guide plate (30) is greater than a maximum width of the main body (53) of the flexible positioning member (50) in an extending direction (D2) of the first wall portion (221) of the sidewall (22).

4. The backlight module of any preceding claim, wherein the light guide plate (30) comprises two first extending structures (34) which are on the first lateral side (31) and are located on both sides of the first recess (35), and the two first extending structures extend into the two first openings (241) of the first wall portion (221), respectively.

5. The backlight module of claim 4, wherein each of the two first extending structures (34) has an inclined surface (36), and the inclined surface is located on a side of the two first extending structures away from the first recess (35).

6. The backlight module of any preceding claim, wherein the flexible positioning member (50) further comprises a second protrusion (52) located between the two first protrusions (51), the first wall portion (221) of the sidewall (22) further has a second opening (242) located between the two first openings, and the second protrusion is fixedly inserted into the second opening.

7. The backlight module of any preceding claim, wherein the light guide plate (30) further has a second lateral side (32) opposite to the first lateral side (31), and the light source (40) emits light towards the second lateral side of the light guide plate.

8. The backlight module of any preceding claim, further comprising an optical film (70), the optical film being disposed on a side of the light guide plate (30) away from the backplate (21) and having a third lateral side (73), the third lateral side corresponding to the first lateral side (31) of the light guide plate (30).

9. The backlight module of claim 8, wherein the flexible positioning member (50) further comprises a barrier (56), the barrier extends from a side of the main body (53) away from the backplate, and the barrier is interposed between the third lateral side of the optical film and the first wall portion (221) of the sidewall (22).

10. The backlight module of claim 9, wherein the optical film (70) has a second recess (72) located on the third lateral side (73) and engaging the barrier (56) of the flexible positioning member (50).

11. The backlight module of claim 10, wherein the optical film (70) comprises two second extending structures (74) which are on the third lateral side (73) and are located on both sides of the second recess (72), and the two second extending structures extend into the two first openings (241) of the first wall portion (221), respectively.

12. The backlight module of any of claim 11, wherein each of the second extending structures (74) has at least one third rounded corner (77).

13. The backlight module of any of claims 1-5 and 7-12, wherein the first wall portion (221A) of the sidewall (22A) has a second opening (242A), the second opening is located between the two first openings (241A) and has a larger area than each of the two first openings.

14. The backlight module of claim 13, wherein in a direction (D1) perpendicular to the backplate (21), the second opening (242A) of the first wall portion (221A) of the sidewall (22A) is taller than the main body (53A) of the flexible positioning member (50A).

15. A display device (15), **characterized by** comprising:
a display panel (16); and
the backlight module (19, 19A) of any preceding claim, wherein the backlight module is positioned to face a rear surface (18) of the display panel.
